Europäisches Patentamt

European Patent Office

Office européen des brevets

(19)

(11) Veröffentlichungsnummer: **0 050 330**
**B1**

(12) # EUROPÄISCHE PATENTSCHRIFT

(45) Veröffentlichungstag der Patentschrift: 29.07.87

(21) Anmeldenummer: 81108410.2

(22) Anmeldetag: 16.10.81

(51) Int. Cl.⁴: **C 12 F 3/06,** A 21 D 2/36, A 23 J 1/00 // A23L1/16

(54) **Verfahren zur Gewinnung ballaststoffreicher und proteinreicher Fraktionen aus Biertreber.**

(30) Priorität: 18.10.80 DE 3039430

(43) Veröffentlichungstag der Anmeldung:
28.04.82 Patentblatt 82/17

(45) Bekanntmachung des Hinweises auf die
Patenterteilung:
29.07.87 Patentblatt 87/31

(84) Benannte Vertragsstaaten:
AT BE CH DE FR GB IT LI LU NL SE

(56) Entgegenhaltungen:
BE-A- 443 756

CEREAL CHEMISTRY, Band 57, Nr. 3, Mai/Juni
1980, Seiten 166-168; J.W. FINLEY et al.:
"Milling and baking properties of dried
brewer's spent grains"

MBAA TECHNICAL QUARTERLY, Band 16, Nr.
3, 1979, Seiten 130-134; P.M. TOWNSLEY:
"Preparation of commercial products from
brewer's waste grain and trub"

(73) Patentinhaber: Wicküler-Küpper-Brauerei KG
Bendahler Strasse 31
D-5600 Wuppertal (DE)

(72) Erfinder: Jirmann, Friedrich
Winchenbachstrasse 55
D-5600 Wuppertal 2 (DE)
Erfinder: Meuser, Friedrich, Prof. Dr.
Seestrasse 11
D-1000 Berlin 65 (DE)
Erfinder: Niefind, Hans J., Dr.
Oberer Grifflenberg 226
D-5600 Wuppertal 1 (DE)

(74) Vertreter: von Kreisler, Alek, Dipl.-Chem. et al
Deichmannhaus am Hauptbahnhof
D-5000 Köln 1 (DE)

Courier Press, Leamington Spa, England.

EP 0 050 330 B1

**Beschreibung**

Die Erfindung betrifft ein Verfahren zur Fraktionierung von Biertrebern. Die entstehenden ballaststoffreichen Produkte können zur Herstellung von Backwaren oder Teigwaren oder Müsli mitverwendet sowie auch—ähnlich wie Speisekleie—direkt verzehrt werden.

Aufgabe der Erfindung ist es, aus den Trebern den Proteinanteil teilweise zu entfernen, um damit den Ballaststoffgehalt in der verbleibenden Restmasse zu erhöhen. Gleichzeitig sollen die Treber so schonend getrocknet werden, daß sie hinsichtlich ihres Wasserbingungs- und Quellvermögens eine den Naßtrebern entsprechende Qualität erhalten.

Die bisherigen Bemühungen zur Nutzbarmachung der Treber für die menschliche Ernährung konzentrierten sich auf die Trennung der verschiedenen zusammengesetzten Massebestandteile und deren Weiterverarbeitung. Bekannte ist auch der Einsatz der getrockneten und gemahlenen Treber als Zusatzstoff für die Backwarenherstellung—DE-PS 23 33 387.

In der DE-PS 327 675 wird ein Verfahren beschrieben, mit dem aus getrockneten Trebern zunächst durch Lösungsmittel-extraktion der Fettanteil entfern wird. Anschließend werden die Proteine in der fettfreien Substanz mit Soda gelöst und abgepreßt. Die Proteine werden danach mit Säure hydrolysiert. Das Hydrolysat wird neutralisiert und zu einem Konzentrat eingedampft, das als Würzstoff verwendet werden kann. Aus dem Schalenrückstand wird Rösten eine karamelartige Masse gewonnen, die zur Bereitung von Aufgußgetränken geeignet sein soll.

Der schalenartige Rückstand ist nach dieser Behandlung zur Trocknung als Ballaststoff nicht geeignet, da er unter der Einwirkung von Fettlösungsmitteln und Soda wesentliche Eigenschaften verliert. Insbesondere wird das Quellvermögen der Schalenbestandteile stark vermindert.

Die Trennung des Proteins aus den Trebern ist auf mechanischem Wege wie sie von Loncin und Schornick in "Brauwelt" 117 (1977) 43 vorgeschlagen wird, einfacher als durch Lösen in Alkalien. Etwa 2/3 des in den Trebern enthaltenen Proteins können durch Rühren, Sieben, Pressen, Absetzen und Zentrifugieren abgetrennt und als "Konzentrat" gewonnen werden, das 50—60% Protein und einen sehr geringen Spelzenanteil enthält.

Entsprechend erhöht sich in der verbliebenden proteinarmen Fraktion der Schalenanteil. Auf der Grundlage der Angaben in der Veröffentlichung hätte danach die proteinarme Fraktion einen Masseanteil von 75%, den verbleibenden Rest von 25% bildete das Konzentrat. Mit dieser Vorhehensweise lassen sich ballaststoffreiche Fraktionen guter Qualität gewinnen, wenn diese schonend getrocknet werden. Das Verfahren ist allergings sehr aufwendig.

Ähnliches gilt auch für die partielle Trennung der Hauptinhaltsstoffe der Treber, wie sie von P.M. Townsley in MBAA Technical quarterly 16 (1979) 130 beschrieben worden ist. Die Trennung erfolgt danach durch Sieben der Treber über Vibrationssiebe, wobei das Siebgut bzw. die Siebe zur Unterstützung des Siebdurchgangs mit Wasser unter hohem Druck besprüht werden. Es werden drei Fraktionen mit unterschiedlichem Protein- bzw. Fasergehalt erhalten. Ihr jeweiliger Masseanteil bzw. Proteingehalt beträgt für die erste Fraktion 54% (11% Protein), die zweite 26% (27% Protein) und die dritte 20% (49% Protein). Der Fasergehalt in diesen Fraktionen ist im Proteingehalt umgekehrt proportional.

Obgleich das Verfahren mit einem erheblichen Abwasseranteil belastet ist, der durch Recycling minimiert werden soll, hält Townsley es zur Trennung der Treberinhaltsstoffe für besser geeignet als die potentielle Möglichkeit der mechanischen Separation nach der Trocknung der Treber. Diese Vermutung ist auf dem Stand der Technik tatsächlich auch richtig, da die Trennung von Proteinen und Schalenbestandteilen nach der Troknung abhängig vom angewendeten Trocknungsverfahren entweder unmöglich oder kaum noch gegeben ist. Während des Trocknens—beispielsweise im Trommeltrocknerbilden sich so feste Verbindungen zwischen Schale und Protein aus, daß die Substanzen durch Absieben nicht mehr voneinander getrennt werden könne. Auch eine separierende Zerkleinerung ist nur unzureichend möglich, so daß sich die Mahlpartikel wegen zu geringer physikalischer Unterschiede kaum durch Sichten oder Sieben voneinander trennen lassen.

Aufgabe der Erfindung ist es, mittels eines einfachen Verfahrens die Hauptinhaltsstoffe der Treber voneinander zu trennen, um einerseits ballaststoffangereicherte und andererseits proteinangereicherte Produkte zu erhalten. Das Verfahren ist darauf gerichtet, die nachzerkleinerte ballaststoffangereicherte Fraktion ohne verarbeitungstechnische Probleme z.B. in Backwaren einarbeiten zu könne.

Der Lösung der Aufgabe liegt die überraschende Erkenntnis zugrunde, daß es gelingt, die Schalenteile und Proteinpartikel der Treber für eine Trennung dadurch aufzuarbeiten, daß die Naßtreber gleichzeitig im Heißluftstrom eines Ultrarotors getrocknet und partiell zerkleinert werden. Durch die plötzliche Wasserverdampfung im Heißlufstrom können die Schalenteile und die Proteinpartikel nicht miteinander verkleben, da sie durch die Wasserdampfbildung weitgehend voneinander getrennt gehalten werden. Die sich bildenden losen Agglomerate werden vom Rotor zerschlagen, wobei aufgrund der unterschiedlichen Festigkeitseigenschaften zwischen Fasern und Proteinpartikeln grobe Schalenbruchstücke und feine Proteinpartikel entstehen. Diese können durch Siebe leicht voneinander getrennt werden. Vorteilhaft für die Trocknung und partielle Zerkleinerung ist es, die Treber vor der Einspeisung in den Ultrarotor mechanisch zu entwässern.

Dementsprechend betrifft die Erfindung ein

Verfahren zur Gewinnung ballaststoffreicher und proteinreicher Fraktionen aus Biertreber, wobei aus Naßtrebern verschieden große Partikel erzeugt und diese durch Sieben getrennt werden, dadurch gekennzeichnet, daß die Naßtreber nach Vorentwässerung im Heißluftstrom während einer schlagartigen Trocknung in grobe Schalenbruchstücke und feine Proteinpartikel zerkleinert und diese getrennt werden.

Das Verfahren der vorliegenden Erfindung wird vorteilhaft so durchgeführt, daß die Temperatur im Trockungsgut 60°C nicht überschreitet.

Bei einer Ausführungsform wird beim erfindungsgemässen Verfahren so verfahren, daß der Ballaststoff-Anteil in einer Teilfraktion der Treber wenigstens 70% beträgt. Bevorzugt beträgt der Ballaststoff-Anteil in einer Teilfraktion der Treber wenigstens 75% und der Proteingehalt ist kleiner als 10% sowie der Fettgehalt kleiner als 6%.

Bei einer weiteren Ausführungsform des erfindungsgemässen Verfahrens ist der Proteinanteil einer Teilfraktion der Treber größer als 30% und der Ballaststoff-Anteil in der Teilfraktion beträgt höchstens 40% sowie der Fettanteil beträgt mindestens 14%.

Gemäss dem Verfahren der Erfindung können die Trebe in beleibig große Teilfraktionen separiert werden, wobei der Ballaststoff-Anteil bzw. der Proteinanteil beliebige Verhältnisse in den Fraktionen zwischen den maximal möglichen Verhältnissen annehmen kann. Bei einer weiteren Ausführungsform des erfindungsgemässen Verfahrens werden zur Verringerung des Trocknungsenergieaufwandes die Trebe mechanische vorentwässert.

Bei einer anderen Ausführungsform des erfindungsgemässen Verfahrens wird der Preßsaft in den Brauprozess zurückgeführt. Es ist auch von Vorteil, daß nach dem Trennen des Schwebstoffanteils nur die kohlehydratreiche Flüssigkeit zurückgeführt wird. Die nach dem erfindungsegemässen Verfahren erhältlichen Produkte werden vorteilhaft für die Ernährung verwendet. Die Erfindung betrifft ebenfalls Nahrungsmittel, die ballaststofreiche Fraktionen und/oder proteinreiche Fraktionen enthalten, die gemäss dem erfindungsgemässen Verfahren erhalten worden sind.

Nachstehend wird die Erfindung anhand eines Ausführungsbeispiels beschrieben.

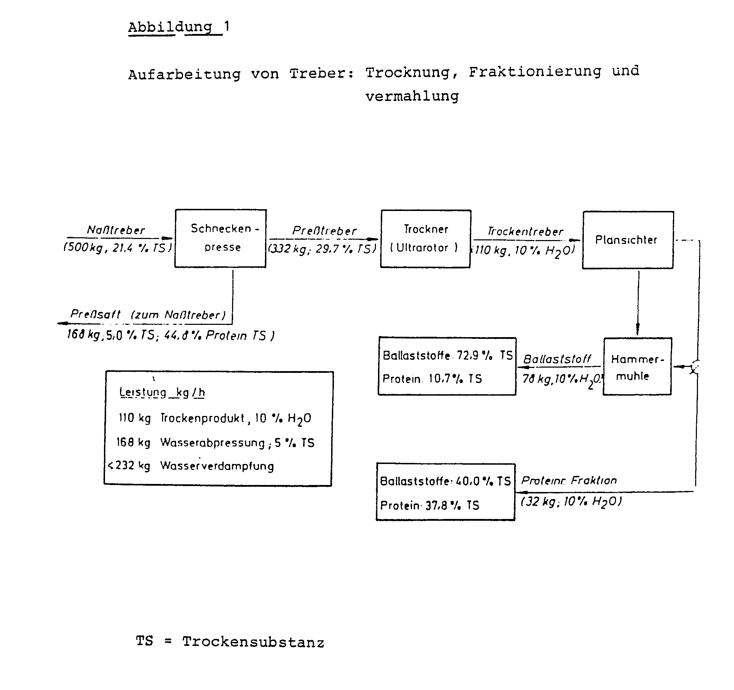

In der Abb. 1 ist eine Anlage skizziert, die 500 kg Naßtreber/Std. verarbeiten kann. Im Betrieb werden 160 kg Wasser/Std. abgepresst, wodurch 8 kg der eingesetzten Trockenmasse von 107 kg in das Preßwasser gelangen. Im Trockner werden weitere 220 kg Wasser/Std. verdampft. Es entstehen 110 kg Trockentreber/Std. mit 10% Wassergehalt. Wird dieser im Verhältnis 70%/305 gesichtet, entstehen am Ende 70 kg ballaststoffreiche und 32 kg proteinreiche Fraktion/Std.

In diesem Beispiel gelangen ca 60% des Treberproteins in nur 30% der Gesamtmasse. Prozentual werden 92% der Trockenmasse der Naßtreber weiterverarbeitet. Der besondere Vorteil der mechanischen Entwässerung besteht darin, ca 40% des Wassers nicht verdampfen zu müssen und außerdem auch keinen Substanzverlust zu erleiden, da der Preßsaft in den Brauprozess zurückgeführt werden kann.

Nach der Trocknung lässt sich das Mahlgut leicht nach verschiedenen Partikelgrößen mit unterschiedlicher Relativzusammensetzung absieben.

TABELLE 1

Zusammensetzung des abgepressten Trebers nach der Trocknung im Ultrarotor

| Treberfraktion Größe (µm) | Anteil (%) | Ballaststoffe (%TS) | Protein (%TS) | Fett (%TS) | Asche (%TS) |
|---|---|---|---|---|---|
| Gesamt | 100 | 62,7 | 17,1 | 8,3 | 4,5 |
| >624 | 13 | 76,1 | 7,0 | 5,0 | 4,5 |
| 250—624 | 39 | 77,3 | 9,7 | 5,6 | 4,6 |
| 150—250 | 19 | 62,7 | 13,0 | 9,3 | 4,4 |
| <150 | 29 | 40,0 | 32,8 | 13,9 | 4,1 |

Abhängig von der jeweiligen Siebgrenze enthalten die Fraktionen Ballaststoffgehalte von mehr als 75%. In ihnen beträgt der Proteingehalt weniger als 10% und der Fettgehalt liegt unter 6%. Nacht Zusammenfassen der Fraktionen >150 µm beträgt der Ballaststoffgehalt immer noch mehr als 70% und der Protein- und Fettgehalt ist gegenüber der Trockenmassezusammensetzung der Naßtreber deutlich herabgesetzt (Tab. 2).

**0 050 330**

TABELLE 2

Zusammensetzung des abgepresseten Trebers nach der Trocknung im Ultrarotor

| Treberfraktion | | Ballaststoffe (% TS) | Protein (% TS) | Fett (% TS) | Glucosepolymere (% TS) | Asche (% TS) | Summe (% TS) |
|---|---|---|---|---|---|---|---|
| Größe (µm) | Anteil (%) | | | | | | |
| Gesamt | 100 | 62,7 | 17,1 | 8,3 | 5,5 | 4,5 | 98,1 |
| >150 | 71 | 72,9 | 10,7 | 7,0 | 4,8 | 4,7 | 100,1 |
| <150 | 29 | 40,0 | 32,8 | 13,9 | 7,2 | 4,1 | 98,0 |

Unter diesen Versuchsbedingungen gelangen in 71% der Gesamtmasse 83% der Ballaststoffe, aber nur 44% des Proteins und 56% des Fetts. (Tabelle 3).

TABELLE 3

Verteilung der inhaltsstoffe des abgepressten und getrockneten trebers durch sieben

| Fraktion | | Ballaststoffe | Verteilung (%) | |
|---|---|---|---|---|
| Größe (µm) | Anteil (%) | | Protein | Fett |
| >150 | 71 | 83 | 44 . | 56 |
| <150 | 29 | 17 | 56 | 44 |

Die mit der Erfindung erzielbaren Vorteile bestehen insbesondere darin, daß einmal ein für die menschliche Ernährung geeignetes ernährungsphysiologisch hochwertiges ballaststoffangereichertes Produkt aus Biertrebern gewonnen wird. Diese Treberfraktion enthält nur einen sehr kleinen Anteil verdaulicher Kohlenhydrate sowie einen deutlich verminderten Protein- und Fettgehalt, dafür aber einen sehr grossen Ballaststoffgehalt. Das Produkt kann in relativ einheitlicher Qualität in großen Mengen hergestellt werden. Aufgrund seines niedrigen Phytingehalts ist es möglich, Nahrungsmittel wie z.B. Backwaren, darunter auch Vollkornprodukte, Teigwaren mit Ballaststoffen anzureichern. Die Ballaststoffanreicherung ist besonders für Mischbrote empfehlenswert.

Weiterhin kann das ballaststoffreiche Produkt bei der Herstellung von Nahrungsmitteln aus verschiedenen Getreidearten wie z.B. Frühstücksflocken, verwendet werden. Es ist also möglich, die bekannten Müsli mit den Produkten anzureichern. Schließlich lassen sich die Verfahrensprodukte gemäss der Erfindung auch als solche verzehren, wie das z.B. mit Speisekleie der Fall ist. Im Gegensatz zur Kleie hat der Treber eine weitgehend einheitliche Zusammensetzung. Seine fünf Hauptinhaltsstoffe repräsentieren praktisch 100% der Trockenmasse, während die gleichen Stoffe in der Kleie nur zu 85% vertreten sind. Die Relativzusammensetzung des Trebers schwankt nur in engen Grenzen, da das Brauverfahren, anders als die Getreidevermahlung, eine definierte Inhaltsstoffausbeute des Rohstoffs zulässt.

Die proteinreichen Fraktionen können sowohl für die menschliche als auch tierische Ernährung verwendet werden.

**Patentansprüche**

1. Verfahren zur Gewinnung ballaststoffreicher und proteinreicher Fraktionen aus Biertreber, wobei aus Naßtrebern verschieden große Partikel erzeugt und diese durch Sieben getrennt werden, dadurch gekennzeichnet, daß die Naßtreber nach Vorentwässerung im Heißluftstreom während einer schlagartigen Trocknung in grobe Schalenbruchstücke und feine Proteinpartikel zerkleinert und diese getrennt werden.

2. Verfahren nach Anspruch 1, dadurch gekennzeichnet, daß die Temperatur im Trocknungsgut 60° C nicht überschreitet.

3. Verfahren nach Anspruch 1 bis 2, dadurch gekennzeichnet, daß der Ballaststoffanteil in einer Teilfraktion der Treber wenigstens 70% beträgt.

4. Verfahren nach Anspruch 1 bis 3, dadurch gekennzeichnet, daß der Ballaststoffanteil in einer Teilfraktion der Treber wenigstens 75% beträgt und der Proteingehalt <10% sowie der Fettgehalt <6% ist.

5. Verfahren nach Anspruch 1 bis 4, dadurch gekennzeichnet, daß der Proteinanteil einer Teilfraktion der Treber >30% ist und der Ballaststoffanteil in ihr höchstens 40% sowie der Fettanteil mindestens 14% beträgt.

6. Verfahren nach Anspruch 1 bis 5, dadurch gekennzeichnet, daß die Treber in beliebig große Teilfraktionen separiert werden, wobei der Ballaststoffanteil bzw. der Proteinanteil beliebige Verhältnisse in den Fraktionen zwischen den maximal möglichen annehmen kann.

4

7. Verfahren nach Anspruch 1 bis 6, dadurch gekennzeichnet, daß zur Verringerung des Trocknungsenergieaufwandes die Treber mechanisch vorentwässert werden.

8. Verfahren nach Ansprüchen 1 bis 7, dadurch gekennzeichnet, daß der Preßsaft in den Brauprozess zurückgeführt wird.

9. Verfahren nach Anspruch 8, dadurch gekennzeichnet, daß nach Trennen des Schwebstoffanteils nur die kohlenhydratreiche Flüssigkeit zurückgeführt wird.

10. Verwendung der nach Ansprüchen 1 bis 9 erhaltenen Produkte für die Ernährung.

11. Nahrungsmittel, enthaltend die nach Anspruchen 1 bis 9 erhaltenen ballaststoffreichen Fraktionen und/oder proteinreichen Fraktionen.

## Revendications

1. Procédé d'obtention de fractions, riches en charges inertes et riches en protéines, de drèche de brasserie, selon lequel on produit à partir de drèches humides diverses grosses particules et on les sépare par tamisage, procédé caractérisé en ce qu'après une élimination préliminaire d'eau dans un courant d'air chaud pendant un séchage brusque, on fragmente les drèches humides en de gros fragments d'enveloppe et de fines particules de protéines, et l'on sépare celles-ci.

2. Procédé selon la revendication 1, caractérisé en ce que la température n'excède pas 60°C dans la matière soumise au séchage.

3. Procédé selon la revendication 1 ou 2, caractérisé en ce que la proportion de charge inerte représente au moins 70% dans une fraction partielle séparée des drèches.

4. Procédé selon les revendications 1 à 3, caractérisé en ce que la proportion de charge inerte représente au moins 75% dans une fraction partielle séparée des drèches et en ce que la teneur en protéines est inférieure à 10% et la teneur en matières grasses inférieure à 6%.

5. Procédé selon les revendications 1 à 4, caractérisé en ce que les protéines représentent plus de 30% d'une fraction partielle séparée des drèches, et en ce que la proportion de charge inerte est au plus de 40% tandis que la proportion de matières grasses est au moins égale à 14%.

6. Procédé selon les revendications 1 à 5, caractérisé en ce que les drèches sont séparées en fractions partielles de dimensions voulues, la proportion de charge inerte, respectivement la proportion de protéines, représentant dans les fraction un rapport déterminé compris entre les extrêmes possibles.

7. Procédé selon les revendications 1 à 6, caractérisé en ce que, pour réduire la dépense d'énergie de séchage, les drèches sont d'abord soumises à une élimination mécanique d'ea

8. Procédé selon les revendications 1 à 7, caractérisé en ce que le jus de pressage est recyclé dans le processus de brassage.

9. Procédé selon la revendication 8, caractérisé en ce que, après séparation de la part de matière en suspension, seule liquide riche en hydrates de carbone est recyclé.

10. Utilisation des produits obtenus selon les revendications 1 à 9, pour l'alimentation.

11. Produit alimentaire contenant les fractions riches echarge et/ou les fractions riches en protéines, obtenu selon le revendications 1 à 9.

## Claims

1. A process for recovering fractions rich in bulk material and rich in protein from brewer's spent grains wherein particles having different sizes are produced from wet spent grains and these are separated by sifting, characterized in that the wet spent grains after a pre-dehydration are comminuted during flash-drying in a stream of hot air to form coarse husk fragments and fine protein particles and these are separated.

2. The process according to claim 1, characterized in that the temperature in the materials being dried does not exceed 60°C.

3. The process according to claims 1 to 2, characterized in that the bulk material portion in a partial fraction of brewer's spent grain is at least 70%.

4. The process according to claims 1 to 3, characterized in that the bulk material portion in a partial fraction of brewer's spent grain is at least 75% and the protein content is <10% and the fat content is <6%.

5. The process according to claims 1 to 4, characterized in that the protein portion in a partial fraction of brewer's spent grain is >30% and the bulk material portion thereof at most is 40% and the fat portion is at least 14%.

6. The process according to claims 1 to 5, characterized in that the brewer's spent grain is separated into partial fractions wherein the bulk material portion and the protein portion, respectively, may assume any optional ratio in the fractions between those possible as the maximum.

7. The process according to claims 1 to 6, characterized in that the brewer's spent grain is mechanically pre-dehydrated in order to reduce the energy expense required for drying.

8. The process according to claims 1 to 7, characterized in that the expressed juice is recirculated into the brewing process.

9. The process according to claim 8, characterized in that upon separation of the suspended matter only the liquid rich in carbohydrates is recirculated.

10. Use of the products obtained according to claims 1 to 9 for nutrition.

11. Food product, containing the fractions rich in bulk material and/or rich in protein obtained according to claims 1 to 9.

**0 050 330**

## Abbildung 1

Aufarbeitung von Treber: Trocknung, Fraktionierung und vermahlung

```
Naßtreber          ┌──────────┐   Preßtreber      ┌──────────┐  Trockentreber   ┌──────────┐
─────────────────► │Schnecken-│  ───────────────► │ Trockner │ ───────────────► │Plansichter│ ──┐
(500 kg, 21.4 % TS)│  presse  │  (332 kg; 29.7 % TS)│(Ultrarotor)│ 110 kg, 10 % H₂O) │          │
                   └──────────┘                    └──────────┘                   └──────────┘
```

Preßsaft (zum Naßtreber)
168 kg; 5,0 % TS; 44,8 % Protein TS )

Ballaststoffe 72,9 % TS   Ballaststoff   Hammer-
Protein 10,7 % TS         78 kg,10 % H₂O! muhle

Leistung kg / h

110 kg  Trockenprodukt, 10 % H₂O

168 kg  Wasserabpressung; 5 % TS

<232 kg  Wasserverdampfung

Ballaststoffe· 40,0 % TS   Proteinr Fraktion
Protein· 37,8 % TS         (32 kg; 10 % H₂O)

TS = Trockensubstanz